# FASCICULE DE BREVET EUROPEEN

(11) **EP 3 097 648 B1**
(45) Date de publication et mention de la délivrance du brevet: **22.11.2017**
(21) Numéro de dépôt: 15701179.2
(22) Date de dépôt: 21.01.2015
(51) Int. Cl.: H01Q 1/22, H04B 7/185, H01Q 1/28, H01Q 1/36, H01Q 1/38, H01Q 1/48, H01Q 9/04

(54) **DISPOSITIF DE COMMUNICATION À BORD D'UN AVION PERMETTANT LA RÉCEPTION DE DONNÉES ET DE SIGNAUX GPS.**
KOMMUNIKATIONSANORDNUNG IN EINEN FLUGZEUG DIE DEN EMPFANG VON DATEN UND GPS SIGNALEN ERMÖGLICHT.
COMMUNICATION DEVICE ON BOARD OF AN AIRCRAFT ALLOWING THE RECEPTION OF DATA AND GPS SIGNALS

(30) Priorité: 24.01.2014 FR 1450625
(43) Date de publication de la demande: 30.11.2016
(73) Titulaire: Centre National d'Etudes Spatiales (CNES), 75001 Paris (FR); MVG Industries, 91140 Villebon-sur-Yvette (FR); Flyops, 33000 Bordeaux (FR)
(72) Inventeur: DUCHESNE, Luc, F-91470 Angervilliers (FR); JOUSSAUME, Xavier, F-33185 Le Haillan (FR); DUMON, Patrick, F-31320 Vigoulet-Auzil (FR)
(74) Mandataire: Regimbeau
(86) Numéro de dépôt international: PCT/EP2015/051165
(87) Numéro de publication internationale: WO 2015/110485

(56) Documents cités:
- WO-A1-95/21388
- FR-A1- 2 912 266
- US-A- 5 650 792
- US-A- 6 121 936

## Description

### DOMAINE TECHNIQUE GENERAL

L'invention concerne les dispositifs de communication permettant de communiquer depuis un aéronef avec un réseau de données de communication et/ou de localisation.

### ETAT DE LA TECHNIQUE

Un aéronef est souvent équipé de dispositifs de communication qui permettent de communiquer avec un réseau de données et/ou de localisation. Un réseau de données est du type IRIDIUM (réseau de communication de données via une constellation de satellites) et un réseau de localisation est du type GPS (en anglais, « *Global Positioning System* »). Les dispositifs de communications sont en général constitués de systèmes d'émission/réception et d'antennes.

De manière connue, l'aéronef est équipé de plusieurs antennes, chacune dédiée à un réseau particulier. En outre, pour ne pas perturber les équipements électroniques de l'aéronef, ces antennes sont disposées sur la coque de l'aéronef.

Ceci n'est pas sans problème.

En effet, dès lors qu'un équipement est disposé sur la coque de l'aéronef, il faut requalifier toute la structure de ce dernier pour des raisons évidentes de sécurité. Ceci est d'autant plus contraignant que le nombre d'antennes est important.

Voir FR 2 912 266 (Satimo SA (FR)).

### PRESENTATION DE L'INVENTION

L'invention propose de pallier au moins un de ces inconvénients.

A cet effet, l'invention propose un dispositif de communication destiné à être disposé dans une cabine d'un aéronef, le dispositif comprenant :
- un ensemble antennaire configuré pour émettre et recevoir des données de communication dans une première bande de fréquences d'un réseau de communication et pour recevoir des données de localisation dans une seconde bande de fréquences d'un réseau de localisation, ledit ensemble antennaire comprenant une antenne présentant un diagramme de rayonnement de révolution autour d'un axe principal, le rayonnement étant maximal dans la direction de cet axe principal, et un système de confinement du rayonnement configuré pour limiter le rayonnement en dehors dudit axe de l'antenne ;
- un modem connecté à l'antenne configuré pour permettre l'émission et la réception de données de communication au travers d'un réseau de communication ;
- un récepteur de données de localisation.

L'invention est avantageusement complétée par les caractéristiques suivantes, prises seules ou en une quelconque de leur combinaison techniquement possible :
- il comprend un boitier cylindrique comprenant une cavité configurée pour loger l'ensemble antennaire, le modem et le récepteur de données de localisation ; un capot configuré pour être fixé audit boitier cylindrique de manière orientable, ledit capot supportant l'ensemble antennaire afin d'orienter ledit ensemble antennaire ;
- le capot est fixé au boitier au moyen d'au moins une charnière permettant d'orienter ledit capot par rapport audit boitier ;
- le système de confinement du rayonnement est constitué d'un ensemble absorbant radiofréquences disposé au-dessous de l'antenne et/ou d'une cavité métallique disposée autour avec possibilité de dépasser au-dessus de l'antenne et/ou d'au moins d'un ou plusieurs choke rings ;
- il comprend un système de fixation configuré pour fixer ledit boitier sur une paroi de l'aéronef telle qu'une surface lisse telle qu'un pare-brise d'un aéronef, une vitre latérale d'un aéronef ;
- il comprend un détecteur de perte de contact configuré pour interrompre une émission radioélectrique de l'ensemble antennaire dès lors qu'une perte de contact entre ledit dispositif et la paroi de l'aéronef est détectée ;
- il comprend un système de communication configuré pour former un point d'accès à un réseau sans fil tel qu'un réseau WI-FI, le réseau de communication étant accessible à distance via le point d'accès ;
- l'antenne comprend un plan de masse, un substrat diélectrique disposé sur ledit plan de masse, un élément rayonnant disposé sur ledit substrat diélectrique, une pluralité d'encoches réalisées sur ledit plan de masse afin de contrôler et d'obtenir une bande de fonctionnement suffisante de manière à ce que ladite antenne rayonne dans lesdites première et seconde bandes de fréquences.

L'invention concerne également un aéronef comprenant un cockpit comprenant un pare-brise et un dispositif de communication selon l'invention. Les avantages de l'invention sont multiples.

Elle apporte une solution amovible, portable et universelle dans sa connectivité. En outre, grâce à sa miniaturisation, elle permet une petite taille et une faible masse pour un faible encombrement de l'équipement et un fonctionnement sans fil dans une cabine d'un aéronef. Elle permet aussi de couvrir une bande fréquentielle de fonctionnement suffisamment large pour émettre et recevoir des données de communication dans une première bande de fréquences d'un réseau de communication et pour recevoir des données de localisation dans une seconde bande de fréquences d'un réseau de localisation.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 illustre un schéma synoptique d'un dispositif de communication selon l'invention ;
- la figure 2 illustre schématiquement un aéronef à l'intérieur duquel sont disposés selon plusieurs possibilités, un dispositif de communication selon l'invention ;
- la figure 3 illustre un dispositif de communication selon l'invention ;
- les figures 4a et 4b illustrent respectivement une vue en coupe et une vue en perspective du dessous d'une antenne d'un dispositif de communication selon l'invention.
- les figures 5a et 5b illustrent respectivement une vue en coupe et une vue de dessus d'un ensemble antennaire d'un dispositif de communication selon l'invention comprenant une antenne et un système de confinement du rayonnement selon plusieurs modes de réalisations.

Sur l'ensemble des figures, les éléments similaires portent des références identiques.

### DESCRIPTION DETAILLEE DE L'INVENTION

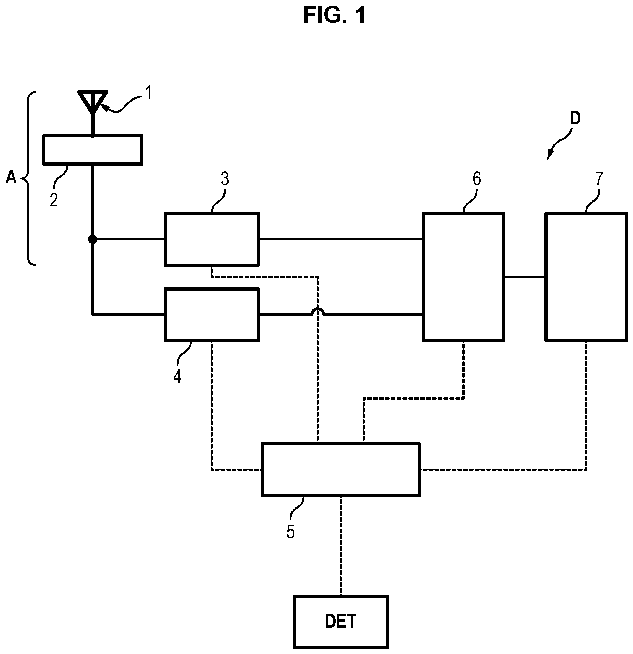

En relation avec la **figure 1****,** un dispositif D de communication destiné à être disposé dans une cabine d'un aéronef comprend un ensemble antennaire A configuré pour émettre et recevoir des données de communication dans une première bande de fréquences d'un réseau de communication et pour recevoir des données de localisation dans une seconde bande de fréquences d'un réseau de localisation.

L'antenne 1 présente un diagramme de rayonnement de révolution autour d'un axe principal, le rayonnement étant maximal dans la direction de cet axe principal.

Compte tenu du fait que le dispositif de communication est destiné à être disposé dans la cabine d'un aéronef, l'ensemble antennaire A comprend un système 2 de confinement du rayonnement configuré pour limiter le rayonnement en dehors de l'axe principal de l'antenne 1.

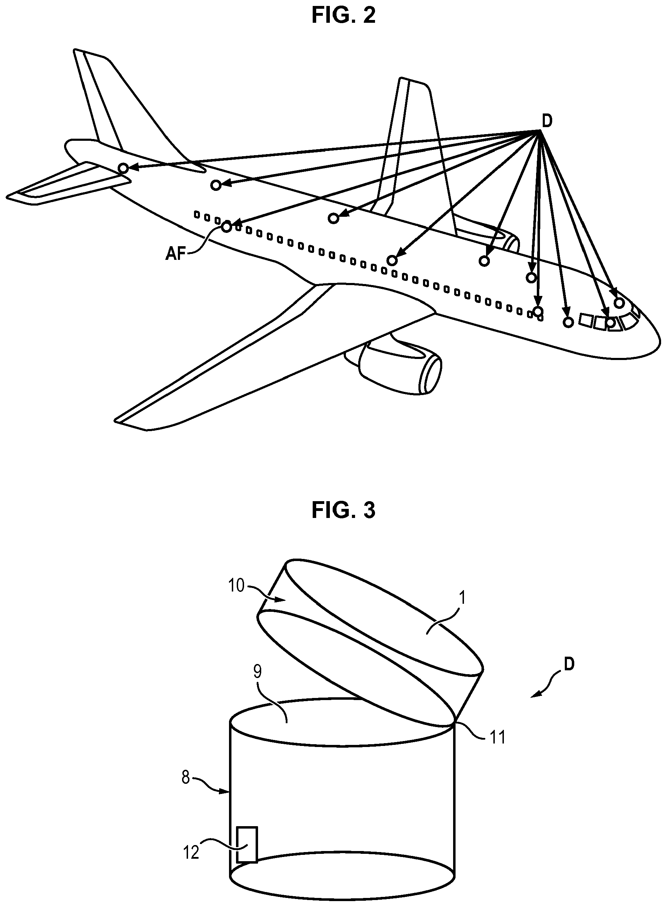

Le dispositif D de communication peut être disposé à plusieurs endroits dans la cabine de l'aéronef. Comme illustré sur la **figure 2****,** le dispositif peut être disposé soit dans le cockpit de l'aéronef AF, ou bien à plusieurs endroits différents dans l'espace réservé aux passagers.

A nouveau en relation avec la figure 1, le dispositif de communication comprend en outre un modem 3 connecté à l'antenne 1 et qui est configuré pour permettre l'émission et la réception de données de communication au travers du réseau de communication et un récepteur 4 de données de localisation du type GPS.

L'antenne 1 est bi-bande et peut émettre et recevoir des données de communication sur le réseau de communication IRIDIUM. Le réseau IRIDIUM est un réseau de satellites orbitaux de communications. Ce réseau est capable d'assurer une connexion 24 heures sur 24 et assure une couverture partout dans le monde, y compris dans les régions des cercles polaires.

Bien entendu, le dispositif de communication peut fonctionner avec tout autre réseau de satellite de communication orbital ou géostationnaire pourvu que le modem 3 utilisé soit celui du réseau de communication désiré. A noter toutefois que certains de ces différents réseaux, n'assurent pas une couverture globale et ou un mode de fonctionnement permanent.

Le récepteur 4 de données de localisation permet à tout moment de localiser le dispositif de communication par le géopositionnement et ainsi de l'aéronef ou le véhicule dans lequel il est embarqué. En plus des coordonnées géographiques, le GPS délivrera les informations suivantes : temps GMT, altitude, vitesse sol, cap, etc. De manière avantageuse, le récepteur de données de localisation délivre ces informations de manière automatique, selon un pas de temps défini et correspondant au moyen dans lequel il est embarqué et/ou à chaque message ou données transmises par le dispositif de communication.

Pour assurer la gestion d'une part de l'émission/réception sur le réseau de communication et d'autre part la réception de données de localisation issues du réseau de localisation, le dispositif de communication comprend une unité de contrôle 6. Cette unité permet de gérer toutes les liaisons de communications et d'en attribuer les priorités de connexion (équipage et /ou passagers). Elle gère également le fonctionnement interne et externe de l'ensemble et dispose de fonctionnalités pour gérer et contrôler activement les niveaux d'émissions et de réception des différents réseaux utilisés (Iridium et Localisation). De plus elle dispose de logiciels embarqués permettant la compression et la décompression de données ainsi que des fonctions de cryptage et de décryptage des données.

Le dispositif de communication peut former un point d'accès à un réseau sans fil tel qu'un réseau WI-FI, le réseau de communication étant accessible à distance via le point d'accès.

Ainsi, via le point d'accès ainsi formé, des équipements mobiles de communication peuvent accéder au réseau de communication de données, le point d'accès acheminant ainsi les communications ou transfert de données des équipements mobiles à bord de l'aéronef (lorsque le dispositif de communication est disposé dans le cockpit de l'aéronef) vers le destinataire final ou le réseau final désiré via le réseau de communication de données.

Pour ce faire, le dispositif de communication comprend une unité 7 de communication sans fil. En particulier, le point d'accès est un point d'accès Wi-Fi. A ce titre, le dispositif de l'unité 7 de communication sans fil comprend une carte WiFi (non représentée) pour créer le point d'accès ainsi qu'une antenne Wi-Fi (non représentée).

Le dispositif de communication comprend une batterie 5 qui est avantageusement de grande autonomie, c'est-à-dire qui peut permettre au dispositif de communication de fonctionner au minimum pendant cinq heures sans interruption. La batterie 5 est avantageusement rechargeable et est connectée aux composants du dispositif de communication qui nécessitent d'être alimentés électriquement.

En relation avec la **figure 3****,** le dispositif de communication comprend également un boitier 8 cylindrique comprenant une cavité 9 configurée pour loger des composants dudit dispositif et un capot 10 configuré pour être fixé audit boitier cylindrique de manière orientable. Le capot 10 supporte l'antenne 1 et le système de confinement 2, l'ensemble antennaire (antenne avec système de confinement) étant alors orientable par rapport au boitier 8. Ceci permet de pouvoir disposer le dispositif à un endroit *ad hoc,* l'antenne 1 avec son système de confinement 2 pouvant alors être orientée séparément.

Afin d'orienter le capot 10 par rapport au boitier 8, le dispositif de communication comprend une ou plusieurs charnière(s) 11. On peut bien entendu envisager d'autres types de composants qui permettraient d'orienter le capot 10 par rapport au boitier 8.

De manière avantageuse, le système 2 de confinement du rayonnement peut prendre plusieurs formes (voir ci-après).

Afin de fixer le boitier sur une surface lisse tel qu'un pare-brise d'un aéronef, une vitre latérale d'un aéronef, le dispositif de communication comprend un système 12 de fixation.

Le système 12 de fixation peut prendre plusieurs formes.

Il peut s'agir d'une ventouse pourvue d'une pompe à vide pouvant se fixer sur toute surface lisse et pare-brise, vitre latérale ou hublot en cockpit ou en cabine. Cette ventouse peut se déployer de la base du boitier ou sur le côté du boitier (voir la figure 3).

Il peut s'agir d'un système d'accrochage par système Velcro™ dont la partie male est fixée le boitier 8 et la partie femelle fixée sur les garnitures intérieures de l'aéronef ou sur les accessoires ou toute autre partie pouvant recevoir cette partie femelle.

Le dispositif D de communication doit pouvoir être coupé dès lors que le dispositif de communication n'est plus en contact avec son support de fixation dans l'aéronef (une paroi vitrée de l'aéronef par exemple). En effet, dans ce cas, le dispositif de communication peut perturber le fonctionnement de l'aéronef.

Pour ce faire, le dispositif de communication comprend un détecteur DET de perte de contact configuré pour détecter le décrochage du dispositif de son support dans l'aéronef.

Ce détecteur DET a pour but de couper l'émission radioélectrique de l'antenne 1 si le contact avec la paroi vitrée de l'aéronef est perdu. Cette sécurité supplémentaire évite ainsi tout risque d'émission radioélectrique vers les occupants ou instruments de l'aéronef.

De manière préférée, un ou plusieurs interrupteurs de type bouton-poussoir sont installés à l'intérieur de la cavité 9 du dispositif de communication de façon à ce que seule la partie bouton dépasse de la hauteur de la cavité 9, vers la vitre. Avec un interrupteur de type normalement ouvert, la liaison électrique est créée quand on appuie sur le bouton. La fixation du dispositif de l'invention sur la paroi vitrée met en pression le ou les boutons. Dans cette position nominale, la liaison électrique est établie et l'antenne 1 peut fonctionner.

Dans le cas d'un décrochage du dispositif par rapport à la paroi, la pression sur au moins un des interrupteurs boutons n'est alors plus maintenue. La liaison électrique est alors coupée.

En variante, le détecteur de perte de contact peut utiliser d'autres types de capteurs tels un interrupteur de pression ou un détecteur inductif ou un détecteur capacitif ou un détecteur optique. Par exemple si la cavité est accrochée au voisinage d'une partie métallique en bord de vitre, le détecteur inductif détecte la perte de contact avec la paroi métallique de l'aéronef.

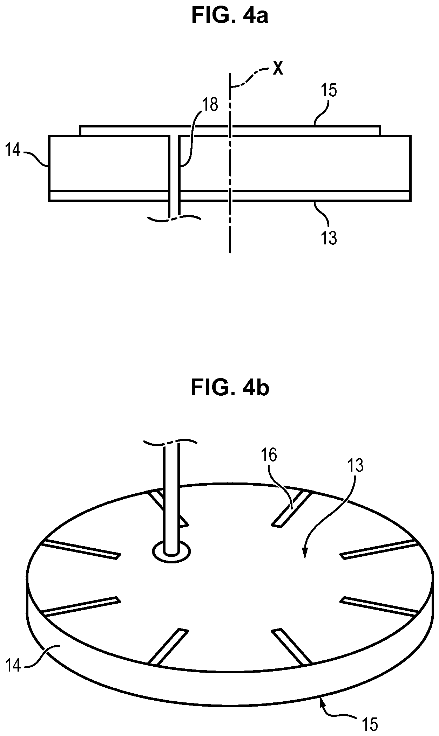

L'antenne 1 est de préférence du type décrite dans le brevet FR 2 912 266 B1 dont une vue en coupe et une vue en perspective du dessous sont illustrées sur les **figures 4a** et **4b** respectivement. Cette antenne comprend en outre un plan de masse 13, un substrat diélectrique 14 disposé sur le plan de masse 13, un élément rayonnant 15 disposé sur le substrat diélectrique 14, une pluralité d'encoches 16 réalisées sur le plan de masse 13 afin de contrôler et d'obtenir une bande de fonctionnement suffisante de manière à ce que ladite antenne rayonne dans lesdites première et seconde bandes de fréquences. Sur la figure 4b, huit encoches fines 16 sont ménagées dans le plan de masse 13. Cette antenne rayonne selon un axe principal X.

Pour alimenter l'antenne 1, cette dernière comprend une sonde coaxiale 18 qui est connectée à l'élément rayonnant 15.

L'antenne 1 est de forme générale circulaire.

Une telle antenne permet simultanément l'émission ou réception de données de communication et la réception de données de localisation.

En outre, l'antenne est omnidirectionnelle et est de petite taille. Le diamètre du substrat diélectrique 14 est de l'ordre de λ/3 et son épaisseur est de l'ordre de λ/30 avec λ correspondant à la longueur d'onde moyenne des fréquences d'opération du dispositif de communication.

De manière avantageuse, pour accroître les capacités et les performances de l'antenne, l'antenne 1 comprend des filtres (non représentés) et des préamplificateurs (non représentés) spécifiques.

Le système 2 de confinement du rayonnement de l'antenne peut prendre plusieurs formes.

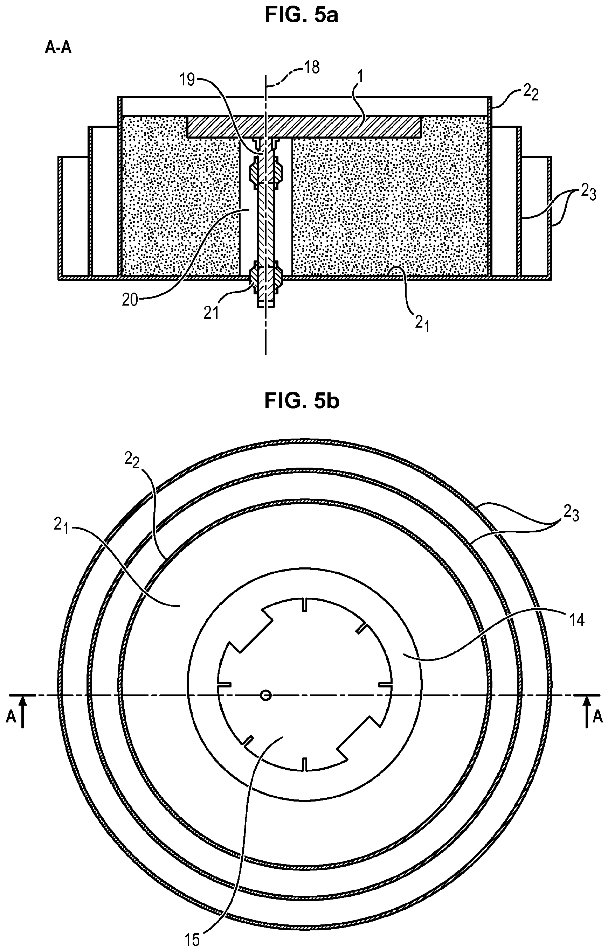

On a illustré sur les **figures 5a** et **5b****,** l'ensemble antennaire A avec trois modes de réalisations possibles pour le système de confinement 2, référencés 2₁, 2₂, 2₃ sur ces figures. Chacun des modes de réalisation du système 2 de confinement peut être utilisé seul ou en combinaison avec les autres.

Selon un premier mode de réalisation, le système de confinement 2 est un ensemble absorbant radiofréquences 2₁ disposé sous l'antenne 1. L'ensemble absorbant est par exemple en matériau du type mousse chargée de particules en carbone et d'épaisseur de l'ordre de 2 à 5 cm.

Dans le cas où le système 2 de confinement est un ensemble absorbant, le dispositif D de communication comprend un connecteur radiofréquences 19 connecté à la sonde coaxiale 18 de l'antenne 1, un câble 20 radiofréquences connecté entre le connecteur 19 et une transition 21 radiofréquences.

Selon un second mode de réalisation, le système 2 de confinement est une cavité métallique 2₂ disposée autour avec possibilité de dépasser au-dessus de l'antenne 1.

Selon un troisième mode de réalisation, le système de confinement est constitué d'un ou plusieurs choke rings 2₃ disposés autour de l'antenne 1.

## Revendications

1. Dispositif (D) de communication destiné à être disposé dans une cabine d'un aéronef (AF), le dispositif (D) comprenant :
- un ensemble antennaire (A) configuré pour émettre et recevoir des données de communication dans une première bande de fréquences d'un réseau de communication et pour recevoir des données de localisation dans une seconde bande de fréquences d'un réseau de localisation, ledit ensemble antennaire (A) comprenant une antenne (1) présentant un diagramme de rayonnement de révolution autour d'un axe principal, le rayonnement étant maximal dans la direction de cet axe principal, et un système (2) de confinement du rayonnement configuré pour limiter le rayonnement en dehors dudit axe de l'antenne (1) ;
- un modem (3) connecté à l'antenne configuré pour permettre l'émission et la réception de données de communication au travers d'un réseau de communication ;
- un récepteur (4) de données de localisation ;
- un boitier (8) cylindrique comprenant une cavité (9) configurée pour loger l'ensemble antennaire (A), le modem et le récepteur de données de localisation ;
- un capot (10) configuré pour être fixé audit boitier cylindrique de manière orientable, ledit capot (10) supportant l'ensemble antennaire (A) afin d'orienter ledit ensemble antennaire (A).

2. Dispositif de communication selon la revendication précédente, dans lequel le capot (10) est fixé au boitier (8) au moyen d'au moins une charnière (11) permettant d'orienter ledit capot (10) par rapport audit boitier (8).

3. Dispositif de communication selon l'une des revendications 1 à 2, dans lequel le système (2) de confinement du rayonnement est constitué d'un ensemble (2₁) absorbant radiofréquences disposé au-dessous de l'antenne (1) et/ou d'une cavité métallique (2₂) disposée autour avec possibilité de dépasser au-dessus de l'antenne (1) et/ou d'au moins d'un ou plusieurs choke rings (2₃).

4. Dispositif de communication selon l'une des revendications précédentes, comprenant un système de fixation configuré pour fixer ledit boitier sur une paroi de l'aéronef telle qu'une surface lisse telle qu'un pare-brise d'un aéronef, une vitre latérale d'un aéronef.

5. Dispositif de communication selon la revendication précédente, comprenant un détecteur (DET) de perte de contact configuré pour interrompre une émission radioélectrique de l'ensemble antennaire dès lors qu'une perte de contact entre ledit dispositif et la paroi de l'aéronef est détectée.

6. Dispositif de communication selon l'une des revendications précédentes, comprenant un système (7) de communication configuré pour former un point d'accès à un réseau sans fil tel qu'un réseau WI-FI, le réseau de communication étant accessible à distance via le point d'accès.

7. Dispositif de communication selon l'une des revendications précédentes, dans lequel l'antenne (1) comprend un plan de masse (13), un substrat diélectrique (14) disposé sur ledit plan de masse, un élément rayonnant (15) disposé sur ledit substrat diélectrique (14), une pluralité d'encoches (16) réalisées sur ledit plan de masse (13) afin de contrôler et d'obtenir une bande de fonctionnement suffisante de manière à ce que ladite antenne rayonne dans lesdites première et seconde bandes de fréquences.

8. Aéronef comprenant un cockpit comprenant un pare-brise et un dispositif de communication selon l'une des revendications précédentes.

## Patentansprüche

1. Kommunikationsvorrichtung (D), die dazu bestimmt ist, in einer Kabine eines Luftfahrzeugs (AF) angeordnet zu werden, wobei die Vorrichtung (D) umfasst:
- eine Antenneneinheit (A), die konfiguriert ist, um Kommunikationsdaten in einem ersten Frequenzband eines Kommunikationsnetzes zu senden und zu empfangen, und um Lokalisierungsdaten in einem zweiten Frequenzband eines Lokalisierungsnetzes zu empfangen, wobei die Antenneneinheit (A) eine Antenne (1) umfasst, die ein Rotationsstrahlungsdiagramm um eine Hauptachse aufweist, wobei die Strahlung in die Richtung dieser Hauptachse maximal ist, und ein System (2) zur Eingrenzung der Strahlung, konfiguriert, um die Strahlung außerhalb der Achse der Antenne (1) einzuschränken;
- ein Modem (3), das mit der Antenne verbunden ist, konfiguriert, um die Sendung und den Empfang von Kommunikationsdaten durch ein Kommunikationsnetz zu ermöglichen;
- einen Empfänger (4) von Lokalisierungsdaten;
- ein zylindrisches Gehäuse (8), eine Vertiefung (9) umfassend, konfiguriert, um die Antenneneinheit (A), das Modem und den Empfänger von Lokalisierungsdaten unterzubringen;
- eine Abdeckung (10), konfiguriert, um auf dem zylindrischen Gehäuse ausrichtbar befestigt zu werden, wobei die Abdeckung (10) die Antenneneinheit (A) trägt, um die Antenneneinheit (A) auszurichten.

2. Kommunikationsvorrichtung nach dem vorstehenden Anspruch, wobei die Abdeckung (10) anhand von zumindest einem Scharnier (11) auf dem Gehäuse (8) befestigt ist, das es ermöglicht, die Abdeckung (10) im Verhältnis zu dem Gehäuse (8) auszurichten.

3. Kommunikationsvorrichtung nach einem der Ansprüche 1 bis 2, wobei das System (2) zur Eingrenzung der Strahlung aus einer Radiofrequenzen absorbierenden Einheit (2₁) gebildet wird, die unterhalb der Antenne (1) angeordnet ist und/oder aus einer metallischen Vertiefung (2₂), die ringsum angeordnet ist, mit der Möglichkeit, die Antenne (1) zu überschreiten, und/oder aus zumindest einem oder mehreren Drosselringen (2₃).

4. Kommunikationsvorrichtung nach einem der vorstehenden Ansprüche, ein Befestigungssystem umfassend, konfiguriert, um das Gehäuse an einer Wand des Luftfahrzeugs, wie einer glatten Oberfläche, wie einer Windschutzscheibe eines Luftfahrzeugs, einem Seitenfenster eines Luftfahrzeugs zu befestigen.

5. Kommunikationsvorrichtung nach dem vorstehenden Anspruch, einen Kontaktverlustdetektor (DET) umfassend, konfiguriert, um eine radioelektrische Abstrahlung der Antenneneinheit zu unterbrechen, sobald ein Kontaktverlust zwischen der Vorrichtung und der Wand des Luftfahrzeugs erfasst wird.

6. Kommunikationsvorrichtung nach einem der vorstehenden Ansprüche, ein Kommunikationssystem (7) umfassend, konfiguriert, um einen Zugangsunkt für ein drahtloses Netzwerk, wie ein WLAN-Netzwerk, zu bilden, wobei aus der Ferne über den Zugangsunkt auf das Kommunikationsnetzwerk zugegriffen werden kann.

7. Kommunikationsvorrichtung nach einem der vorstehenden Ansprüche, wobei die Antenne (1) eine Erdungsplatte (13) umfasst, ein dielektrisches Substrat (14), das auf der Erdungsplatte angeordnet ist, ein Strahlungselement (15), das auf dem dielektrischen Substrat (14) angeordnet ist, eine Vielzahl von Einkerbungen (16), die auf der Erdungsplatte (13) ausgeführt sind, um ein ausreichendes Betriebsband zu bestimmen und zu erhalten, damit die Antenne in dem ersten und zweiten Frequenzband strahlt.

8. Luftfahrzeug, ein Cockpit umfassend, das eine Windschutzscheibe und eine Kommunikationsvorrichtung nach einem der vorstehenden Ansprüche umfasst.

## Claims

1. Communication device (D) intended to be positioned in a cockpit of an aircraft (AF), the device (D) comprising:
- an antenna unit (A) configured to send and receive communication data in a first frequency band of a communication network and to receive location data in a second frequency band of a location network, said antenna unit (A) comprising an antenna (1) that has a radiation pattern revolving around a main axis, the radiation being maximal in the direction of this main axis, and a radiation confinement system (2) configured to limit the radiation outside of said antenna (1) axis;
- a modem (3) connected to the antenna, configured to enable the sending and receiving of communication data through a communication network;
- a location data receiver (4);
- a cylindrical box (8) comprising a cavity (9) configured to accommodate the antenna unit (A), the modem and the location data receiver;
- a cover (10), configured to be fixed to said cylindrical box so that it can be oriented, said cover (10) supporting the antenna unit (A) in order to orientate said antenna unit (A).

2. Communication device according to the preceding claim, wherein the cover (10) is fixed to the box (8) by the means of at least one hinge (11) enabling said cover (10) to be oriented in relation to said box (8).

3. Communication device according to one of claims 1 to 2, wherein the radiation confinement system (2) is constituted of a unit (2₁) absorbing radiofrequencies positioned below the antenna (1) and/or a metal cavity (2₂) positioned around, with the option of passing above the antenna (1) and/or at least one or several choke rings (2₃).

4. Communication device according to one of the preceding claims, comprising a fixing system configured to fix said box onto a wall of the aircraft, such as a smooth surface such as a windscreen of an aircraft, a side window of an aircraft.

5. Communication device according to the preceding claim, comprising a loss-of-contact detector (DET) configured to interrupt a radioelectric emission from the antenna unit as soon as a loss of contact between said device and wall of the aircraft is detected.

6. Communication device according to one of the preceding claims, comprising a communication system (7) configured to form an access point to a wireless network such as a WI-FI network, the communication network being accessible remotely via the access point.

7. Communication device according to one of the preceding claims, wherein the antenna (1) comprises a ground plane (13), a dielectric substrate (14) positioned on said ground plane, a radiating element (15) positioned on said dielectric substrate (14), a plurality of grooves (16) created on said ground plane (13) in order to control and obtain a sufficient functioning band, in a way that said antenna radiates in said first and second frequency bands.

8. Aircraft comprising a cockpit comprising a windscreen and a communication device according to one of the preceding claims.
